# EUROPEAN PATENT APPLICATION

(11) **EP 1 987 939 A1**
(43) Date of publication of application: **05.11.2008**
(21) Application number: 07107522.0
(22) Date of filing: 04.05.2007
(51) Int. Cl.: B29C 45/16, B65D 1/24

(54) **Injection moulded crate**

(71) Applicant: D.W. PLASTICS N.V., 3740 Bilzen (BE)
(72) Inventor: Brouwers, Werner Christiaan Martin, 3990 Kleine-Brogel (BE); Willems, Gert Louis Clement, 3060 Bertem (BE)
(74) Representative: van Westenbrugge, Andries

(57) **Abstract**

The invention relates to an injection moulded crate comprising an indication (3), like a text or a logo or characters. This crate comprises a first crate section (4) injection moulded from a first synthetic material (4) and a second crate section (5) subsequently injection moulded over at least a part of a surface (1,2) of a wall of said first crate section (4) using a second synthetic material (5). At the location of said indication (3), said first crate section (4) has an embossed area (2), and least part of said indication (3) is indented into said second synthetic material up until the surface (2) of said embossed area (2).
The invention further relates to a method for producing a crate.

## Description

### Background

The present invention relates to an injection moulded crate and a method producing such a crate.

A particular problem in injection moulded crates is to provide these crates with indications, such as text, brand names or logos, of a relatively small size. In particular, providing these injection moulded crates with small text and logos, for instance in order of a height of several millimetres and a length of several centimetres, has been proven difficult.

A known method to provide these indications on the walls of a crate of synthetic material, is to provide the wall of a mould with a mirror image of this indication in an embossed way or a protruding way. In this way, the moulded crate will have the text or logo indented or embossed on the wall in the same material and colour.

Another method is to provide the mould with an in mould label. If the In mould label is only required to create these small text, this method has proven to be costly and time consuming. Providing these small indications as small in mould labels has proven difficult and time consuming.

In another method, the indication is painted or printed on the wall. This again is time consuming, and in the often rough handling of crates, the indication wears off.
A well known technique in moulding crates is so-called two-component moulding or overmoulding. In this technique, a large part of the crate is first moulded in a first moulding cavity using a first synthetic material, often HDPE, polypropylene or the like. In a next production step, this crate section is positioned in a second mould. This second mould has walls which leave part of the walls of the crate section free, thus creating a moulding cavity bounded by mould walls and the surface of the crate section.

Using a second synthetic material, often a thermoplastic elastomeric polymer, a part of the surface of the crate section is covered, for instance for forming soft grip handles. A well known technique for preventing synthetic material at the boundary to accidentally blend is surrounding the area to be overmoulded using a groove around this area in the crate section, or to provide the crate section with a lip or joggle around this area. When placing the injection moulded crate in the second mould, the wall of the mould should lay against these lips or extend in these grooves and thus seal the area to be overmoulded. This technique, however, is up to now only suited and used for two component moulding or overmoulding of large areas in relatively thick layers, mostly using elastomeric polymers. In this way, for instance soft grips are formed on bottle crates. Tests have shown that so-called bleeding, where one of the synthetic materials partly mixes with the other one, may pose a problem. In most of the know techniques, positioning of the crate in the second moulding step is very critical.

Furthermore, this method as such is not suited for providing small details, text or logos, as they will easily "bleed", causing both synthetic materials to mix, thus causing stripes of mixed colours when materials of different colours are used.

### Summary of the invention

The invention aims to provide a method for providing a crate with an indication of a small size, such as text or logos, and a new crate provided with an indication.

According to a first aspect of the invention this is realized with an injection moulded crate comprising an indication, like a text or a logo or characters, said crate comprising a first crate section injection moulded from a first synthetic material and a second crate section subsequently injection moulded over at least a part of a surface of a wall of said first crate section using a second synthetic material. This crate is characterised in that at the location of said indication said first crate section has an embossed area, and least part of said indication is indented into said second synthetic material up until the surface of said embossed area.

The invention further provides a method for producing a crate having an indication, such as characters, a logo or brand name, on at least one wall, said method comprising the steps of:
- injecting a first synthetic material in a first mould cavity for producing a first crate section, at least one of the mould walls forming said mould cavity having an indented area which results in the first crate section having an embossed area covering the location of the indication;
- positioning said first crate section in a second mould cavity which is bounded by at least a part of a surface of said first crate section comprising the embossed area and a mould wall, and said mould wall at the location of said embossed area of the first crate section comprising an embossed mirror image of the indication extending at least up to the surface of the embossed area
- injecting a second synthetic material in said second moulding cavity, said second synthetic material covering said embossed area of said first crate section but leaving said area of said embossed mirror image substantially free of said second synthetic material.

This provides the possibility of providing a crate with small detailed indications on the outer wall of a crate. This indication is durable as it can be made of the same material as the further crate.

This method provides the possibility of producing a crate having small and detailed indications like textual information on a wall of a crate. In particular, it makes it possible to provide indications in a colour which contrasts with the colour of the further crate. Furthermore, it makes it possible to provide an indication which is indented with respect to the surrounding surface.

Tests have been done by the applicant, using the overmoulding technique discussed above in the following way in order to try to find a new way of providing a wall or a crate with an indication. In these tests, first characters were embossed on a crate section which was moulded first. Subsequently, This crate section was placed in a second mould in which the wall of the mould pressed against the embossed characters and a second synthetic material was injected in order to flow around the embossed characters.

This resulted in bleeding, and overflow of second synthetic material over the characters. This effect occurred especially when the details became smaller.

Using the method of the invention, it proved to be possible to provide crates with a new type of indications. For instance, when using a different colour of plastic, the letters would visually stand out against the background. It proved also possible to provide the wall of a crate with letters of a different colour which stand out (or which are embossed) with respect to the surface of the second synthetic material. This indication can be as scratch resistant and have all the beneficial properties of the further surface of the crate.

Furthermore, it proved possible to use the same or comparable material, which makes this crate recyclable in its entirety.

Furthermore, the crate can be produced economically and provides a durable crate with new aesthetic possibilities. The overmoulded layer can be thin and applied in a fast overmoulding process.

Further embodiments of the invention are described in the depending claims, which can also form the basis of one or more divisional applications.

The various aspects discussed in this patent can be combined in order to provide additional advantages.

### Description of the drawings

The invention will be further elucidated referring to an preferred embodiment shown in the drawing wherein shown in:
Fig. 1a crate with small text indicated near the arrow;
Fig. 1b a detail of the crate of figure 1;
Fig. 2 shows a cross section at the position indicated with the dotted line of the crate in the mould cavity;
Fig. 3 shows the end result in detail.

### Detailed description of embodiments

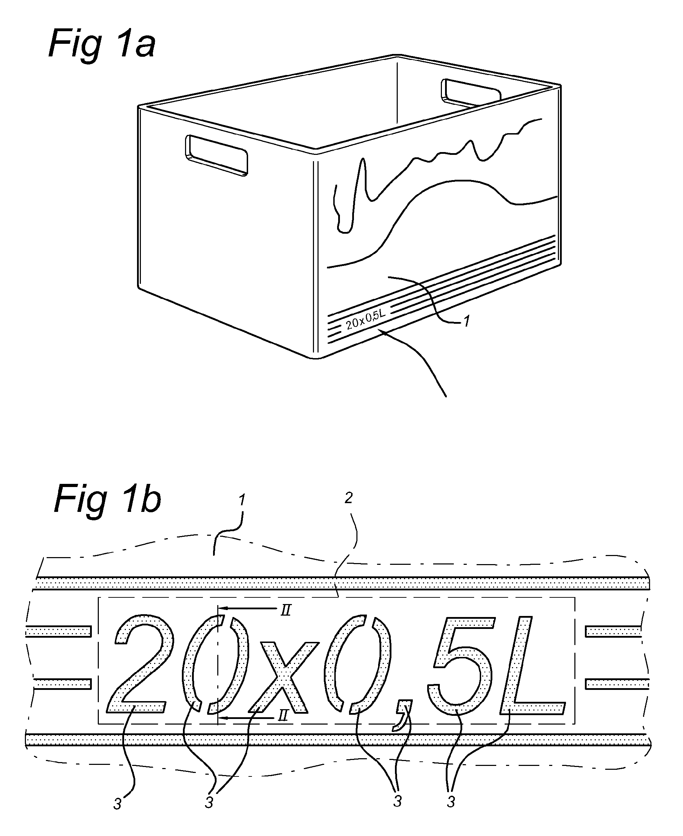

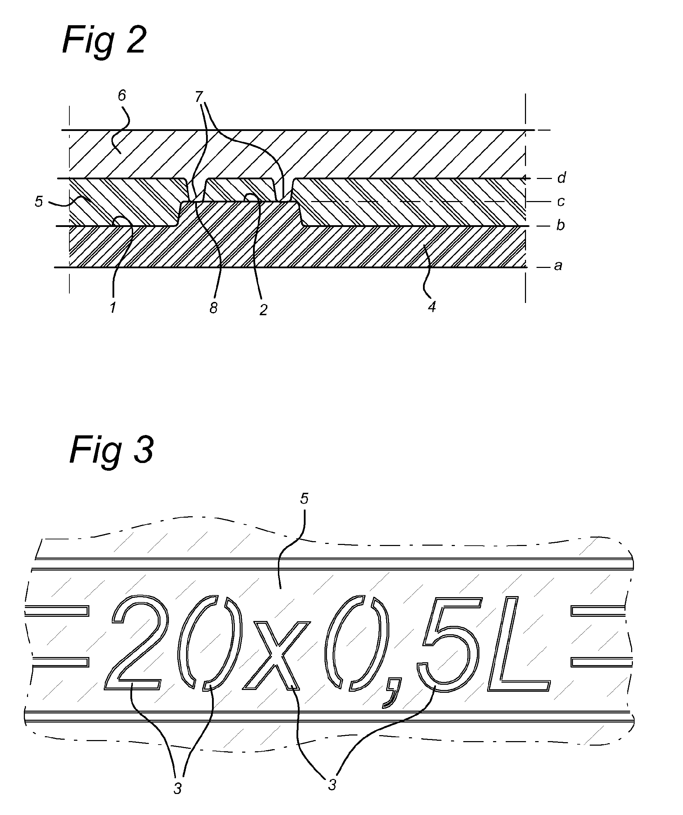

Fig. 1a shows an example of a crate with a small detailed indication at the arrow. Fig. 1b shows this indication schematically in more detail. The dotted line indicates a cross section which is detailed in fig. 2 with a crate still in the mould.

In the method of the invention, first a crate section is injection moulded form a first synthetic material. At the location where in a next step the indication will be positioned, an embossed area 2 is made during the first moulding step. To that end, the mould has a cut-out part in its wall.

In fig. 2, a cross section is shown o a crate in the mould during a next moulding step. Crate section 4 has a surface 1 at a level b with an embossed part which has a surface 2 which is at level c above the level b of surface 1. Onto this embossed area, the indication3 of text, or logo will be applied.

Against the wall of crate section 4, a mould 6 is positioned. This mould 6 has embossed parts 7, which are a mirror image of the indication 3 which needs to be applied to the crate. The mould 6 is placed against the wall of the moulded crate section 4, in such a way that the embossed parts 7 of the mould slightly protrude into the surface of the embossed area 2 of the crate surface at position 8 in order to provide a proper sealing of these parts from further injected material. This should preferably not detrimentally affect the surface.

Between the wall of the mould 6 and the surface 1 of the moulded crate section 4 a moulding cavity 5 is formed. Into this moulding cavity 5, a further synthetic material 5 is injection moulded. This material will thus cover the parts of the moulded crate sections, which are not covered by the mould 6. In this way, the indication 3 will be left free from the second material. If for instance this second synthetic material will have a different colour from the first synthetic material of the crate section 4, this will provide a clear visual contrast. In this way, very small details will be clearly visible, without the detrimental effects of bleeding. Furthermore, no leaking will occur.

The thickness of the wall of a crate section 4, i.e. the distance a-b, usually is about 1-3 mm. It should be thick enough to provide rigidity to the crate, but in the mean time be as thin as possible.

The height of the embossed area 2 usually has a planar surface. In most embodiments, its height, i.e. the distance b-c, will be about 0.3-1.5 mm, preferably about 1 mm.

The height of the layer of second synthetic material 5, i.e. the distance b-d, will usually be about 0.5-2 mm, preferably 1-1.5 mm.

The different sizes should be chosen in such a way that the indication is clearly visible, also from a larger angle. Thus, the distance c-d preferably is about 0.5-1 mm

In the method of the invention, good results were achieved with synthetic material which was of the same type as the first synthetic material, for instance HDPE or polypropylene

Figure 3 shows a small part of a crate onto which a second over moulded layer 5 has been formed. The characters 3 will clearly show as they will have the colour of the underlying synthetic material. These letters will thus be indented into the overmould layer

It will also be obvious after the above description and drawings are included to illustrate some embodiments of the invention, and not to limit the scope of protection. Starting from this disclosure, many more embodiments will be evident to a skilled person which are within the scope of protection and the essence of this invention and which are obvious combinations of prior art techniques and the disclosure of this patent.

## Claims

1. Injection moulded crate comprising an indication (3), like a text or a logo or characters, said crate comprising a first crate section (4) injection moulded from a first synthetic material (4) and a second crate section (5) subsequently injection moulded over at least a part of a surface (1, 2) of a wall of said first crate section (4) using a second synthetic material (5), **characterised in that** at the location of said indication (3) said first crate section has an embossed area (2), and least part of said indication (3) is indented into said second synthetic material up until the surface (2) of said embossed area (2).

2. Injection moulded crate according to claim 1, wherein the surface (2) of said embossed area is substantially planar.

3. Injection moulded crate according to claim 1 or 2, wherein the height of said embossed area is about 0.5-1 mm.

4. Injection moulded crate according to any one of the preceding claims, wherein the layer thickness of the second synthetic material outside said embossed area is about 1-2.5 mm.

5. Injection moulded crate according to any one of the preceding claims, wherein the indication has a line width of about 0,5-2 mm, and the indication has characters of about 0,5-2 cm in height.

6. Injection moulded crate according to any one of the preceding claims, wherein the first and second synthetic material are polyolefin, preferably HDPE or polypropylene.

7. Injection moulded crate according to any one of the preceding claims, wherein the colour of the first synthetic material differs from the colour of the second synthetic material, preferably the colours are contrasting colours.

8. Method for producing a crate having an indication (3), such as characters, a logo or brand name, on at least one wall, said method comprising the steps of:
- injecting a first synthetic material in a first mould cavity for producing a first crate section (4), at least one of the mould walls forming said mould cavity having an indented area which results in the first crate section having an embossed area covering the location of the indication;
- positioning said first crate section (4) in a second mould cavity which is bounded by at least a part of a surface (1, 2) of said first crate section (4) comprising the embossed area and a mould wall (6), and said mould wall at the location of said embossed area of the first crate section comprising an embossed mirror image (7) of the indication extending at least up to the surface (2) of the embossed area
- injecting a second synthetic material (5) in said second moulding cavity, said second synthetic material (5) covering said embossed area of said first crate section (4) but leaving said area of said embossed mirror image substantially free of said second synthetic material (5).

9. Mould suitable for use in the method or for producing the crate according to any one of the preceding claims.

10. Device comprising one or more of the characterising features described in the description and/or shown in the attached drawings.

11. Method comprising one or more of the characterising features described in the description and/or shown in the attached drawings.
